# DEMANDE DE BREVET EUROPEEN

(11) **EP 1 439 672 A1**
(43) Date de publication de la demande: **21.07.2004**
(21) Numéro de dépôt: 03293067.9
(22) Date de dépôt: 08.12.2003
(51) Int. Cl.: H04L 12/56

(54) **Méthode de configuration d'un chemin de routage dans un routeur ip**

(30) Priorité: 14.01.2003 FR 0300330
(71) Demandeur: ALCATEL, 75008 Paris (FR)
(72) Inventeur: Conte, Alberto, 75014 Paris (FR); Chischportich, Stephen, 75013 Paris (FR); Dauchy, Philippe, 75014 Paris (FR)
(74) Mandataire: Chaffraix, Sylvain

(57) **Abrégé**

Le procédé permet de configurer dans un routeur (10) un chemin de routage vers une adresse dans un réseau IP, à l'aide d'une unité de contrôle de routage (1) distincte du routeur (10). Il comprend les étapes de :
- a) envoi par le routeur (10) vers l'unité de contrôle de routage (1), d'un chemin de routage vers ladite adresse (21 ) ;
- b) envoi par l'unité de contrôle de routage (1) vers le routeur (10) d'un message de validation (22) ; et
- c) configuration du chemin de routage sélectionné dans le routeur (10).

## Description

La présente invention concerne un procédé pour configurer dans un routeur un chemin de routage vers une adresse dans un réseau IP. Elle concerne aussi un réseau IP ainsi qu'un routeur IP.

Le réseau Internet interconnecte une multitude de réseaux utilisant le protocole IP (de l'anglais « Internet Protocol ») et permettant à leurs terminaux d'échanger des données sous la forme de paquets. Ces paquets de données sont couramment désignés par datagrammes. Par commodité, nous désignerons par sous-réseaux les différents réseaux IP ainsi interconnectés pour les distinguer du réseau Internet global.

Il est connu d'acheminer les datagrammes à travers le réseau Internet depuis un terminal émetteur jusqu'à un terminal destinataire par le biais de routeurs IP. Les routeurs sont des dispositifs qui déterminent le chemin dans le réseau Internet que doit emprunter un datagramme pour atteindre le destinataire. Ainsi, un terminal émetteur d'un sous-réseau IP connecté à Internet peut envoyer un datagramme vers un terminal destinataire connecté à un autre sous-réseau IP. Pour cela, le datagramme émis par le terminal émetteur est reçu par un premier routeur. Ce premier routeur lit l'adresse IP du terminal destinataire contenue dans l'en-tête du datagramme pour envoyer ce dernier vers le sous-réseau du terminal destinataire, soit directement si ce premier routeur y est connecté, soit via des routeurs intermédiaires dans le cas contraire. Chaque routeur intermédiaire envoie le datagramme vers le routeur suivant jusqu'à atteindre le sous-réseau auquel est connecté le terminal destinataire. Le datagramme est donc transmis de façon successive de routeur en routeur jusqu'au sous-réseau auquel le terminal destinataire est connecté, pour être finalement délivré à ce terminal.

Pour assurer cette transmission successive, chaque routeur comprend une table de routage qui est une table de correspondance entre l'adresse IP du sous-réseau auquel le terminal destinataire est connecté et l'adresse IP du prochain routeur dans le réseau Internet auquel il doit envoyer le datagramme à délivrer à ce terminal. Le routeur détermine l'adresse IP du sous-réseau IP auquel est connecté le terminal destinataire à partir de l'adresse IP du terminal destinataire. En fait, les adresses IP de toutes les entités - tels que terminaux, routeurs, etc... - appartenant à un sous-réseau ont une première partie qui est commune. Le sous-réseau peut en outre être limité aux entités dont le reste de leur adresse IP appartient à un sous-ensemble de l'ensemble des adresses exprimables avec cette première partie commune. L'adresse IP d'un sous-réseau consiste alors dans cette première partie commune et au masque permettant de discriminer les parties restantes des adresses IP appartenant à ce sous-ensemble.

Les tables de routage des routeurs nécessitent d'être mise à jour en fonction des modifications affectant les différents sous-réseaux IP. Ces modifications, que nous désignerons par informations de routage, peuvent notamment consister dans la connexion ou la déconnexion d'un sous-réseau IP au réseau Internet, l'existence d'un nouveau chemin de routage vers un sous-réseau donné ou la suppression d'un chemin de routage vers un sous-réseau donné et l'adjonction ou la suppressions d'un routeur IP.

Un routeur peut mettre en oeuvre un routage de type statique auquel cas la table de routage du routeur est mise à jour manuellement. Mais le routage est généralement de type dynamique, c'est-à-dire que la table de routage du routeur est mise à jour automatiquement par le routeur en fonction des informations de routage qu'il reçoit. Les informations de mises à jour sont véhiculées entre les routeurs grâce à un protocole de routage qui permet au routeur de recevoir les informations de routage aux fins de mise à jour de sa table de routage et de partager les informations de routage avec les autres routeurs auxquels le routeur est connecté.

Il existe différents protocoles de routage utilisés notamment en fonction de la localisation des routeurs dans le réseau. Ainsi, l'on distingue habituellement :
- les routeurs externes ou de bordure (en anglais « exterior routers » ou « edge routers ») reliant les réseaux autonomes ou systèmes autonomes (appelés en anglais « Autonomous Systems ») entre eux, le protocole de routage utilisé avec ces routeurs étant notamment EGP (de l'anglais « Exterior Gateway Protocol ») et BGP (de l'anglais « Border Gateway Protocol ») ; et
- les routeurs internes assurant le routage à l'intérieur d'un réseau autonome et utilisant entre eux ou dans leurs relations avec les routeurs externes un protocole de type IGP (de l'anglais « Interior Gateway Protocol ») tels que RIP ( de l'anglais « Routing Information Protocol »).

Quel que soit le routeur IP concerné et le protocole de routage mis en oeuvre, lorsqu'il reçoit une information de routage consistant par exemple dans une nouvelle route vers un sous-réseau donné, le routeur met en oeuvre un algorithme de routage servant à évaluer l'intérêt de cette nouvelle route par rapport à celle(s) dont il a préalablement connaissance. Si l'algorithme de routage arrive à la conclusion que cette nouvelle route est la plus adéquate, le routeur met immédiatement à jour sa table de routage pour utiliser à l'avenir cette nouvelle route dès lors que les datagrammes sont destinés à ce sous-réseau. Cette nouvelle route peut impliquer que le routeur envoie à l'avenir ces datagrammes à un routeur voisin dans le réseau qui est différent de celui auquel il les envoyait avant la mise à jour de sa table de routage. La mise à jour de la table de routage est donc réalisée de façon autonome par chaque routeur grâce à son algorithme de routage en fonction des informations de routage qu'il reçoit des autres routeurs, ce qui a pour résultat d'optimiser le routage au niveau local.

Ce processus de routage n'est pas toujours satisfaisant. Ainsi, dans des applications du type téléphone sur IP (en anglais, « Phone over IP ») ou multimédia sur IP (en anglais, Multimedia over IP »), il est nécessaire de fournir une certaine qualité de service QoS (de l'anglais, « Quality of Service ») pour assurer des transmissions satisfaisantes à travers le réseau, par exemple en fournissant une bande passante suffisante pour la transmission des données. Or, chaque routeur mettant à jour sa table de routage de façon autonome, peut dévier de façon intempestive le flux de données vers des tronçons du réseau qui ne sont pas appropriés pour atteindre la qualité de service QoS requise. Ou encore, en cas de réservation de ressources le long d'un chemin donné dans le réseau pour un flux de données déterminé, les routeurs risquent de dévier le flux de données hors de ce chemin avec pour conséquence que la réservation de ressources manque son but.

Par ailleurs, ce processus de routage ne permet pas non plus de gérer avec souplesse le routage à travers le réseau en fonction d'impératifs d'administration d'ordre commercial ou similaire. Ainsi, un administrateur réseau peut souhaiter que des données soient transmises soit en évitant, soit en empruntant une partie du réseau Internet administré par une autre personne en fonction d'accords passés avec celle-ci. Or, le processus de routage ne permet pas de prendre en considération aisément ces impératifs.

Le but de l'invention est de pallier au moins partiellement ces inconvénients. Ainsi, l'invention vise à permettre le contrôle du routage à travers le réseau notamment pour assurer un certain niveau de qualité de service QoS ou encore pour fournir une souplesse dans le routage des datagrammes à travers le réseau.

A cette fin, l'invention propose un procédé pour configurer dans un routeur un chemin de routage vers une adresse dans un réseau IP, à l'aide d'une unité de contrôle de routage distincte du routeur, comprenant les étapes de :
- a) envoi par le routeur vers l'unité de contrôle de routage, d'un chemin de routage vers ladite adresse ;
- b) envoi par l'unité de contrôle de routage vers le routeur d'un message de validation ; et
- c) configuration du chemin de routage sélectionné dans le routeur.

Ainsi, après que le chemin de routage sélectionné ait été configuré dans le routeur, ce dernier envoie sur ce chemin les datagrammes à destination de ladite adresse.

Selon un mode de réalisation préféré, le routeur sélectionne le chemin de routage envoyé dans l'étape a) en fonction d'une information reçu par le routeur concernant le routage vers ladite adresse.

Selon un autre mode de réalisation préféré, l'unité de contrôle de routage exécute l'étape b) à un moment déterminé en fonction de l'état du trafic dans le réseau.

Selon encore un autre mode de réalisation préféré, l'unité de contrôle de routage exécute l'étape b) après qu'un flux de données à délivrer à ladite adresse pour lequel existe une réservation de ressources le long d'un chemin à travers le réseau, ait traversé le routeur.

Selon encore un autre mode de réalisation préféré, l'unité de contrôle de routage exécute l'étape b) après avoir provoqué une autre réservation de ressources dans le réseau pour un flux de données à délivrer à ladite adresse pour lequel existe une réservation de ressources le long d'un chemin à travers le réseau, cette autre réservation de ressources étant effectuée le long du chemin de routage sélectionné.

Selon encore un autre mode de réalisation préféré, l'étape c) comprend en outre :
- envoi par le routeur du chemin de routage sélectionné vers au moins un autre routeur.

Selon un autre aspect, l'invention propose aussi un routeur IP, comprenant :
- des moyens de sélection d'un chemin de routage vers une adresse IP ;
- des moyens envoyant sur réseau le chemin de routage sélectionné ;
- de moyens pour recevoir via réseau un message de validation du chemin de routage sélectionné ; et
- des moyens configurant le chemin de routage sélectionné dans le routeur sur réception d'un message de validation dudit chemin de routage.

Selon encore un autre aspect, l'invention propose encore un réseau IP comprenant au moins un routeur et une unité de contrôle de routage distincte du routeur dans lequel le routeur et l'unité de contrôle mettent en oeuvre le procédé selon l'invention. Il est avantageux que l'unité de contrôle et le routeur communiquent via le réseau IP.

Dans le cadre de l'invention, on entend par une « adresse dans un réseau IP », l'adresse IP d'un sous-réseau IP du réseau IP ou encore une adresse IP d'un élément quelconque connecté au réseau IP tel qu'un terminal ou un routeur.

Le fait que les routeurs selon l'invention attendent une validation extérieure des chemins de routages qu'ils sélectionnent permet d'effectuer un contrôle extérieur sur les chemins de routage configurés dans un ou plusieurs, voir tous les routeurs du réseau. Ce contrôle extérieur peut être le fait d'une seule et unique unité de contrôle de routage contrôlant l'ensemble des routeurs contrôlés du réseau. Ainsi, l'invention rend notamment possible un contrôle centralisé des flux de données dans le réseau. Le contrôle extérieur des routeurs contrôlés peut aussi être le fait d'une ou de pluralité d'unités de contrôle de routage.

L'invention est particulièrement avantageuse en raison de sa simplicité de mise en oeuvre dans les routeurs existants éventuellement déjà en place dans des réseaux. En effet, il suffit d'insérer les étapes d'envoi des mises à jours envisagées et d'attente de validation extérieure dans la chaîne de traitement logicielle du routeur chargée de la gestion des chemins de routages sans modifier d'autres éléments physiques ou logiciels du routeur.

D'autres caractéristiques et avantages de l'invention apparaîtront à la lecture de la description qui suit de modes de réalisation préférés de l'invention, donnée à titre d'exemple et en référence au dessin annexé.

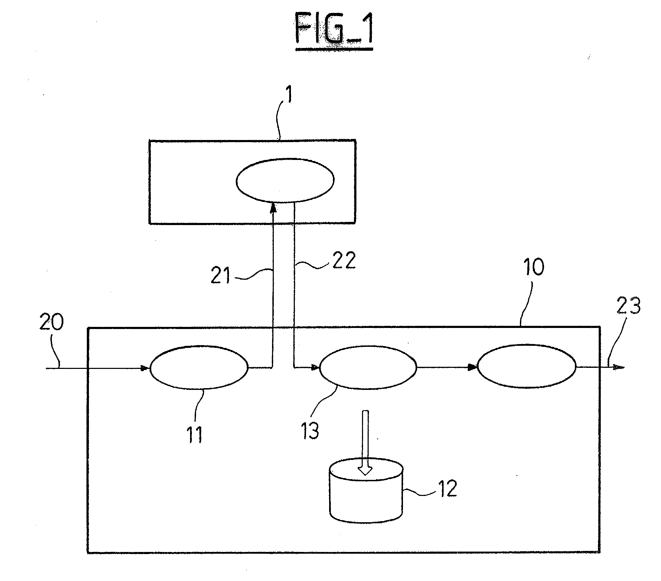

La figure 1 illustre schématiquement un mode de réalisation du procédé de l'invention.

L'invention propose de contrôler la configuration des chemins de routage dans un routeur d'un réseau IP par le fait que le routeur attende une validation extérieure avant de configurer un nouveau chemin de routage qu'il a sélectionné. La validation peut ainsi être fournie par une unité de contrôle de routage distincte du routeur. L'unité de contrôle de routage fournit la validation si le nouveau chemin de routage sélectionné est considéré comme acceptable ou s'abstient de fournir la validation si le nouveau chemin sélectionné par le routeur est inopportun. En variante, l'unité de contrôle de routage peut également retarder la validation jusqu'à ce que le nouveau chemin de routage sélectionné soit devenu acceptable.

La figure 1 illustre un routeur 10 dont la mise à jour des chemins de routage est contrôlée par une unité de contrôle de routage 1. Le routeur 10 reçoit des informations de routage 20 via le réseau IP de façon connue en soi. Ces informations de routage peuvent notamment consister dans la connexion ou la déconnexion d'un sous-réseau IP au réseau IP, l'existence d'un nouveau chemin de routage à travers le réseau IP vers un sous-réseau donné, la suppression d'un chemin de routage vers un sous-réseau donné ou encore l'adjonction ou la suppression d'un routeur IP dans le réseau IP. Généralement, ces informations sont envoyées au routeur 10 par des sources connectées au réseau IP, notamment d'autres routeurs. La communication de ces informations de routage peut être réalisée à l'aide d'un protocole de routage quelconque tel que EGPou BGP ou encore de type IGP tel que RIP.

Le routeur 10 comprend de préférence une table de routage 12 classique. Le routeur 10 met en oeuvre un algorithme de routage 11 qui, à partir d'une information de routage 20 reçue par le routeur 10, détermine s'il y a lieu de mettre à jour les chemins de routage dans la table de routage 12 et définit le cas échéant la mise à jour à effectuer dans celle-ci. L'algorithme de routage 11 peut être du type connu de l'art antérieur. Le routeur 10 comprend aussi classiquement un module 13 servant à mettre à jour la table de routage 12 conformément aux mises à jour définies par l'algorithme de routage 11.

La mise à jour d'un chemin de routage dans la table de routage 12 peut résider :
- dans la configuration d'un chemin de routage vers une adresse IP pour lequel aucune route n'avait été configurée dans le routeur (auquel cas le routeur applique généralement un chemin de routage par défaut),
- dans la modification d'un chemin de routage vers une adresse IP déjà configuré dans le routeur, ou
- dans la suppression d'un chemin de routage vers une adresse IP préalablement configuré dans le routeur (auquel cas le routeur peut appliquer à nouveau un chemin de routage par défaut).

Le routeur 10 peut aussi classiquement comprendre un module 14 décidant s'il y a lieu d'envoyer le chemin de routage mis à jour à un ou plusieurs autres routeurs ou appareils connectés au réseau. Cet envoi est symbolisé par la flèche 23. Cet envoi peut se faire de façon connu en soi. Les fonctions de ce module 14 peuvent notamment être exécutées classiquement après que le module 13 ait mis à jour la table de routage.

Le routeur 10 est prévu pour que les mises à jour des chemins de routage de la table de routage 12 définies par l'algorithme de routage 11 soient envoyées vers l'unité de contrôle de routage 1. Cet envoi est symbolisé par la flèche 21.

Le module 13 de mise à jour de la table de routage ne procède pas à la mise à jour définie par l'algorithme de routage 11 tant que le routeur 10 n'a pas reçu un message de validation de l'unité de contrôle de routage 1. Par conséquent, le module 14 n'envoie pas non plus d'information de routage vers d'autres appareils du réseau tant que le routeur 10 n'a pas reçu ce message de validation. L'envoi du message de validation par l'unité de contrôle de routage 1 est symbolisé par la flèche 22.

Lorsque le routeur 10 reçoit le message de validation, le module 13 met à jour la table de routage 12 conformément à la mise à jour définie par l'algorithme de routage 11 et le module 14 envoie le cas échéant le chemin de routage mis à jour à d'autres appareils du réseau.

Dans un souci de simplicité, la communication entre l'unité de contrôle de routage 1 et le routeur 10 - notamment pour l'envoi des mises à jour envisagée 21 et des messages de validation 22 - se fait via le réseau IP lui-même. En variante, la communication entre l'unité de contrôle de routage 1 et le routeur 10 peut se faire via une liaison filaire ou via un autre réseau distinct du réseau IP dans lequel le routeur 10 assure le routage.

Ainsi, l'unité de contrôle de routage 1 permet de contrôler si la mise à jour de la table de routage définie par l'algorithme de routage 11 est acceptable ou non. Si elle est acceptable, l'unité de contrôle de routage envoie le message de validation 22 au routeur 10, ce qui a pour conséquence la mise à jour de la table de routage 12. Au contraire, si cette mise à jour définie par l'algorithme de routage 11 n'est pas acceptable, l'unité de contrôle de routage 1 n'envoie pas de message de validation et par conséquent cette mise à jour ne sera pas mise en place dans la table de routage 12. Pour cela, l'unité de contrôle de routage 1 peut simplement garder le silence suite à la réception de la mise à jour envisagée 21. En variante, l'unité de contrôle de routage 1 envoie un message d'invalidation au lieu de garder le silence.

Dans une variante particulièrement avantageuse, le message de validation 22 consiste dans la mise à jour envisagée 21 elle-même. Autrement dit, lorsqu'elle considère acceptable une mise à jour d'un chemin de routage définie par l'algorithme de routage 11, l'unité de contrôle de routage 1 renvoie cette mise à jour vers le routeur 10. Le module 13 met alors en place la mise à jour reçue par le routeur 10 dans la table de routage 12 et le module 14 - s'il existe - exécute ses fonctions. Cette variante permet de définir implicitement la correspondance entre le message de validation 22 et la mise à jour envisagée 21.

L'unité de contrôle de routage 1 peut en outre déterminer le moment le plus opportun pour effectuer la mise à jour des chemins de routage dans le routeur 10 en retardant éventuellement l'envoi du message de validation 22.

La décision de mettre à jour ou non la configuration de routage du routeur 10 et le choix du moment pour réaliser cette mise à jour peut ainsi prendre en compte des critères de qualité de service QoS ou encore des politiques d'administration des datagrammes à travers le réseau IP.

Les règles d'administration du réseau IP mise en oeuvre par l'unité de contrôle de routage 1 peuvent lui être fournis par un système d'administration de réseau NMS ou encore un système qui gère les accords dits SLA (de l'anglais « Service Level Agreement ») passés avec les voisins, c'est-à-dire des entités administratives gérant ou contrôlant un domaine IP adjacent à celui de l'unité de contrôle de routage. Ces règles d'administration peuvent aussi comprendre des règles prédéterminées relevant de l'ingénierie du trafic dans le réseau configurées directement dans l'unité de contrôle 1.

Comme déjà mentionné, l'unité de contrôle de routage 1 peut éventuellement retarder la mise en place dans le routeur 10 de la mise à jour envisagée 21 d'un chemin de routage, par exemple pour tenir compte de l'état du trafic dans le réseau, en particulier pour attendre que les conditions du trafic dans le réseau permettent la modification des chemins de routage sans inconvénient.

Ainsi, une unité de contrôle QoS (en anglais « QoS controller ») connue en soi peut avoir réalisée une réservation de ressources le long d'un chemin à travers le réseau incluant le routeur 10 vers une adresse de destination pour un flux de données déterminé, cette réservation de ressources pouvant par exemple comprendre l'allocation de mémoire dans les routeurs sur ce chemin pour recevoir et transmettre ce flux de données. Alors que ce flux de données n'a pas encore été complètement délivrée à l'adresse de destination, il est possible que le routeur 10 reçoive une information de routage 20 lui signalant l'existence d'un autre chemin de routage vers cette adresse de destination. Dans le cas où l'algorithme de routage 1 1 sélectionne cet autre chemin pour être mis en place dans la table de routage 12, il est préférable que l'unité de contrôle de routage 1 retarde la mise à jour correspondante de la table de routage 12 par le module 13 en n'envoyant pas immédiatement la validation 22 pour ce chemin au routeur 10. En effet, à défaut, le flux de données risque d'emprunter un chemin différent de celui le long duquel la réservation de ressources a été faite.

Une première possibilité d'éviter cet inconvénient consiste pour l'unité de contrôle de routage 1 à retarder l'envoi du message de validation 22 tant que le flux de données n'a pas entièrement traversé le routeur 10. La mise en place du nouveau chemin de routage dans la table de routage 12 du routeur 10 est donc retardé jusqu'à ce que le flux de données ait entièrement traversé le routeur 10. L'unité de contrôle de routage 1 peut être informée de façon simple de ce que le flux de données concerné a entièrement traversé le routeur 10 par l'unité de contrôle QoS. En effet, l'unité de contrôle QoS est informée de ce que le flux de données concerné a été entièrement délivré à l'adresse de destination pour mettre fin à cette réservation de ressources devenue désormais sans objet. Ainsi, le flux de données est acheminé suivant le chemin initial le long duquel la réservation de ressources a effectivement eu lieu.

Une deuxième possibilité d'éviter cet inconvénient consiste pour l'unité de contrôle de routage 1 à retarder l'envoi du message de validation 22 et à demander qu'une autre réservation de ressources soit effectuée le long du nouveau chemin. Pour cela, l'unité de contrôle de routage 1 peut demander à l'unité de contrôle QoS d'effectuer cette nouvelle réservation de ressources le long du nouveau chemin. Pour cela, l'unité de contrôle de routage 1 informe l'unité de contrôle QoS de la définition de ce nouveau chemin. Lorsque cette réservation est faite, l'unité de contrôle QoS en informe l'unité de contrôle de routage 1 qui envoie alors au routeur 10 le message de validation 22. Le module 13 du routeur 10 inscrit alors le nouveau chemin dans la table de routage 12. Par conséquent, le flux de données concerné emprunte le nouveau chemin le long duquel les ressources ont été réservées.

Bien entendu, dans les deux possibilités, l'unité de contrôle de routage 1 peut être informée de l'existence d'une réservation de ressources par l'unité de contrôle QoS.

Une troisième possibilité d'éviter cet inconvénient consiste pour l'unité de contrôle de routage 1 à envoyer à l'unité de contrôle QoS le nouveau chemin de routage défini par l'algorithme de routage 1 1 et à attendre un message de validation de cette dernière avant d'envoyer elle-même un message de validation 22 au routeur 10. Ainsi, l'unité de contrôle QoS vérifie si le nouveau chemin de routage affecte une réservation de ressources existante. Dans la négative, l'unité de contrôle QoS envoie - de préférence immédiatement - le message de validation à l'unité de contrôle de routage 1 qui envoie à son tour le message de validation 22 au routeur 10. Dans l'affirmative, l'unité de contrôle QoS effectue une nouvelle réservation de ressources le long du nouveau chemin. Une fois la réservation de ressources mises en place, l'unité de contrôle QoS envoie le message de validation à l'unité de contrôle de routage qui envoie à son tour le message de validation 22 au routeur 10.

L'unité de contrôle de routage 1 provoque donc la nouvelle réservation de ressources par l'unité de contrôle QoS aussi bien dans la deuxième possibilité que dans la troisième possibilité.

Ces trois possibilités ne sont que des exemples préférés pour éviter l'inconvénient précité.

Par ailleurs, l'unité de contrôle QoS et l'unité de contrôle de routage 1 peuvent ne constituer qu'une seule entité physique, autrement dit être mis en oeuvre avec une électronique commune. Mais il peut aussi s'agir de deux entités physiques distinctes communiquant alors entre elles de préférence via le réseau IP.

Bien entendu, la présente invention n'est pas limitée aux exemples et au modes de réalisation décrit et représenté, mais elle est susceptible de nombreuses variantes accessibles à l'homme de l'art. Ainsi, une même unité de contrôle de routage peut contrôler une pluralité de routeurs du réseau IP.

Le procédé de l'invention permet de contrôler les routeurs quel que soit leur emplacement dans leur réseau, en particulier, qu'il s'agisse de routeurs externes ou de routeurs internes.

Par ailleurs, les informations de routage 20 peuvent encore provenir de toute sorte de sources telles qu'un système d'administration de réseau NMS (de l'anglais « Network Management System »). Un tel système NMS peut notamment initialiser via le réseau des chemins de routage dans le routeur lors de sa mise en service dans le réseau. Les données d'initialisation envoyées par le système NMS au routeur 10 peuvent ainsi être contrôlées par l'unité de contrôle de routage 1 qui empêchera que des chemins de routage inacceptables soient effectivement configurés dans le routeur 10.

Enfin, une unité de contrôle de routage peut former une entité physique distincte des autres éléments connectés au réseau IP. Mais elle peut aussi être intégré dans un autre appareil connecté au réseau. Ainsi, elle peut être intégré dans un système d'administration de réseau NMS. Elle peut aussi être intégré dans un routeur du réseau IP qui permet alors de contrôler d'autres routeurs du réseau IP.

## Revendications

1. Procédé pour configurer dans un routeur (10) un chemin de routage vers une adresse dans un réseau IP, à l'aide d'une unité de contrôle de routage
(1) distincte du routeur (10), comprenant les étapes de :
- a) envoi par le routeur (10) vers l'unité de contrôle de routage (1), d'un chemin de routage vers ladite adresse (21) ;
- b) envoi par l'unité de contrôle de routage (1) vers le routeur (10) d'un message de validation (22) ; et
- c) configuration du chemin de routage sélectionné dans le routeur (10).

2. Procédé selon la revendication 1, **caractérisé en ce que** le routeur (10) sélectionne le chemin de routage envoyé dans l'étape a) en fonction d'une information (20) reçu par le routeur concernant le routage vers ladite adresse.

3. Procédé selon la revendication 1 ou 2, **caractérisé en ce que** l'unité de contrôle de routage (1) exécute l'étape b) à un moment déterminé en fonction de l'état du trafic dans le réseau.

4. Procédé selon la revendication 1 ou 2, **caractérisé en ce que** l'unité de contrôle de routage (1) exécute l'étape b) après qu'un flux de données à délivrer à ladite adresse pour lequel existe une réservation de ressources le long d'un chemin à travers le réseau, ait traversé le routeur (10).

5. Procédé selon la revendication 1 ou 2, **caractérisé en ce que** l'unité de contrôle de routage (1) exécute l'étape b) après avoir provoqué une autre réservation de ressources dans le réseau pour un flux de données à délivrer à ladite adresse pour lequel existe une réservation de ressources le long d'un chemin à travers le réseau, cette autre réservation de ressources étant effectuée le long du chemin de routage sélectionné.

6. Procédé selon l'une quelconque des revendications 1 à 5, **caractérisé en ce que** l'étape c) comprend en outre :
- envoi (23) par le routeur (10) du chemin de routage sélectionné vers au moins un autre routeur.

7. Routeur IP, comprenant :
- des moyens de sélection (11) d'un chemin de routage vers une adresse IP;
- des moyens envoyant sur réseau le chemin de routage sélectionné (21) ;
- de moyens pour recevoir via réseau un message de validation (22) du chemin de routage sélectionné ; et
- des moyens (13) configurant le chemin de routage sélectionné dans le routeur sur réception d'un message de validation dudit chemin de routage.

8. Réseau IP comprenant au moins un routeur (10) et une unité de contrôle de routage (1 ) distincte du routeur dans lequel le routeur et l'unité de contrôle mettent en oeuvre le procédé selon l'une quelconque des revendications 1 à 6.

9. Réseau IP selon la revendication 8, **caractérisé en ce que** l'unité de contrôle (1 ) et le routeur (10) communiquent via le réseau IP.
